# EUROPÄISCHE PATENTSCHRIFT

(11) **EP 0 402 506 B1**
(45) Veröffentlichungstag und Bekanntmachung des Hinweises auf die Patenterteilung: **21.08.1996**
(21) Anmeldenummer: 89110865.6
(22) Anmeldetag: 15.06.1989
(51) Int. Cl.: B23Q 11/00, B23B 29/034

(54) **Drehangetriebene Spindel**
Driven spindle
Broche entraînée

(43) Veröffentlichungstag der Anmeldung: 19.12.1990
(73) Patentinhaber: Th. Kieserling & Albrecht GmbH & Co., D-42651 Solingen (DE)
(72) Erfinder: Glomb, Reiner, Dipl.-Ing., D-5620 Velbert (DE); Maresch, Peter, Dipl.-Ing., D-5650 Solingen (DE); Wagner, Ralf, Dipl.-Ing., D-5650 Solingen (DE)
(74) Vertreter: Stachow, Ernst-Walther, Prof. Dr.

(56) Entgegenhaltungen:
- EP-A- 0 044 825
- BE-A- 444 336
- DE-A- 3 605 850
- FR-A- 2 545 395
- GB-A- 519 866
- US-A- 2 593 124

## Beschreibung

Die Erfindung bezieht sich auf eine drehangetriebene Spindel nach dem Oberbegriff von Patentanspruch 1.

Derartige Spindeln, die meistens als Hohlspindeln ausgebildet sind, gibt es an Fräsmaschinen, Gewindeschneidmaschinen, an Schälmaschinen oder ähnlichen Maschinen, an denen an der Spindel während der Rotation derselben ein Werkzeug oder dergleichen radial zur Drehachse der Spindel verstellt werden soll. Dies geschieht regelmäßig über eine Kraftumlenkung der im wesentlichen radialen Kräfte der Schieber in eine Axialkraft, die von einem relativ zur Spindel beweglichen, mit der Spindel umlaufenden Bauteil vermittels eines Verstellmechanismus, der das Bauteil relativ zur Spindel bewegt, erfolgt.

Aus der DE-OS 30 00 055 ist eine Spindel mit einem Messerkopf bekannt, mit der spanende Drehbearbeitung an runden Stangen durchgeführt wird. Die Spindel ist in einem beweglichen Lagergehäuse in Wälzlagern getragen. Die Spindel trägt ein axial verschiebliches Bauteil, dessen Axialbewegung vom ruhenden Lagergehäuse aus gesteuert wird. An dem stirnseitigen Messerkopf dieser Spindel sind zwei Messer vorgesehen, die synchron von einem zentralen Verstellmechanismus in radialer Richtung verstellt werden. Das Bauteil ist als in die Spindel eingeschobene Hülse ausgebildet, dessen axiale Bewegung über Zahnräder kinematisch mit der radialen Bewegung der Schieber verbunden ist.

Durch die Kraftumlenkung werden Axialkräfte in die Spindel und in das Bauteil zur Verschiebung der Schieber eingeleitet. Diese Axialkräfte belasten die Spindel, die Spindellager, das Bauteil und den Verstellantrieb für das Bauteil bzw. für den Schieber mit dem Werkzeug.

Aus der FR-A-2 545 395 ist eine drehangetriebene, quer zur Drehachse verschiebbare Spindel bekannt, bei der eine Kompensation der drehzahlabhängigen Fliehkräfte durch verzahnte Ausgleichsgewichte erfolgt, die je nach Drehzahl verschoben werden und ein Kräftegleichgewicht einstellen.

Der Erfindung liegt die Aufgabe zugrunde, die aus der Umlenkung der Flieh-, Arbeits- oder Reibkräfte von Schiebern oder ähnlichen Teilen resultierenden, Bauteil und Spindel gegeneinander verspannenden Kräfte unter Ausschluß des Lagergehäuses zu kompensieren.

Diese Aufgabe wird erfindungsgemäß durch die Merkmale von Anspruch 1 gelöst. Zur Kompensation der axialen Kräfte, die aus der radialen Abstützung der Schieber und deren Umlenkung im Spindelsystem entstehen, wird deren Kompensation durch Fliehgewichte vorgenommen. Die Zentrifugalkräfte der Fliehgewichte und der Schieber wachsen und verringern sich im Gleichschritt mit der Drehzahl. Sie werden sowohl bei den Fliehgewichten als auch bei den Schiebern in axiale Richtung umgelenkt und zwar so, daß sie sich im wesentlichen aufheben. Die Kraftrichtungen der Axialkräfte aus den beiden Zentrifugalkräften sind entgegengesetzt. Die Fliehkraftkompensation erfolgt innerhalb der Einheit aus Spindel und Bauteil, ohne daß wesentliche Teile der Axialkräfte in die Spindellagerung oder in den Verstellmechanismus eingeleitet werden. Die Belastung der Spindellager wird durch die Erfindung wesentlich herabgesetzt.

Bevorzugt ist die Ausgestaltung der Erfindung nach den Ansprüchen 2 und 3 vorgesehen, die wegen ihrer baulichen Vorteile am leichtesten in bestehende Spindelsysteme eingebaut werden kann. Die Axialkräfte, die durch eine Kraftumlenkung der Schieber-Fliehkräfte an einer Schräge zwischen dem/den Schiebern und dem Bauteil entstehen, können vorteilhaft durch eine Schräge oder ein Paar von Schrägen und ein Fliehgewicht kompensiert werden. Die Schrägen für Schieber und Fliehgewichte sind vorzugsweise in ihrer Neigung gleich oder ähnlich, jedoch mit entgegengesetztem Vorzeichen ausgebildet.

Die Fliehgewichte liegen in einem sich nach außen hin verjüngenden Spalt und drücken die Spaltwände auseinander. So wird die radial gerichtete Zentrifugalkraft der Fliehgewichte in eine Axialkraft umgesetzt.

Als Fliehgewichte können nach Anspruch 4 in Weiterbildung der Erfindung problemlos aus der Wälzlagerindustrie bekannte Kugeln oder Rollen Verwendung finden. Die runden Fliehgewichte sind in einem Käfig, der die Hohlwelle und/oder das Bauteil wie ein Ring einschließt, in Taschen beweglich gelagert. Die Taschen werden radial außen von einer Schräge abgeschlossen, so daß die Kugeln bei Rotation entlang der Schrägen versuchen, nach außen zu gelangen. Die damit ansatzweise verbundene axiale Bewegung der den Spalt bildenden Schrägen wird durch eine Stirnfläche an der Spindel oder am Bauteil unterbunden. Die zur axialen Abstützung der Fliehgewichte erforderliche Kraft kompensiert die durch den oder die Schieber in die Spindel eingeleitete Axialkraft.

Durch die Verschiebung des Bauteils zur radialen Verstellung der Schieber verändert sich der Spalt, in den die Fliehgewichte bei der Rotation der Spindel hineindrängen. Wenn die Schieber radial nach innen verstellt werden, so kann die Schräge zur Abstützung der Fliehgewichte so gewählt werden, daß sich der Spalt vergrößert und die Fliehgewichte nach außen wandern. Das ist eine vorteilhafte Ausgestaltung, weil bei nach innen verstellten Schiebern meistens die Drehzahl der Spindel erhöht wird, um mit gleicher Umfangsgeschwindigkeit am inneren Ende der Schieber ein Werkstück bearbeiten zu können. Somit kann der Grad der Kompensation der Axialkräfte, die die Spindel und das Bauteil verspannen, nicht nur durch Bemessung der Fliehgewichte und Veränderung der Neigung der Schrägen variiert werden, sondern auch durch den Radius, auf dem die Fliehgewichte bei der Rotation in dem sich ihnen bietenden Spalt gehalten werden.

Alternativ zu der Ausführungsform der Erfindung mit in einen Spalt drückenden Fliehgewichten kann nach Anspruch 5 auch die Anbringung der Fliehgewichte an dem freien Arm eines oder mehrerer Winkelhebel vorgesehen sein. Dabei ist der Hebelarm mit den Fliehgewichten so gelagert, daß er sich im wesentlichen in Achsrichtung der Spindelachse erstreckt. Der zweite Hebelarm liegt in einer Querebene der Spindel und liegt an dieser oder dem daran gelagerten Bauteil, das die Schieber abstützt, an. Die Anlenkung des Winkelhebels kann sowohl an der Spindel als auch an dem Bauteil erfolgen.

Meistens ist es erwünscht, das Bauteil bzw. die Schieber während des Betriebes der Spindel entsprechend den Ansprüchen 6 und 7 zu verstellen. Die Erfindung eröffnet die Möglichkeit, auch den Verstellantrieb für das Bauteil von den axialen Kräften zu entlasten und so die Verstellung leichter gängig zu machen und damit genauer zu steuern. Das Bauteil muß nicht mehr gegen die von den Schiebern ausgehenden Axialkräfte verstellt werden.

Die mit Anspruch 8 verfolgte Weiterbildung der Erfindung dient der Montageerleichterung und auch der Betriebssicherheit der Spindel. Die Fliehgewichte können in einer Baugruppe vormontiert sein, die als Einheit auf die Spindel aufgesetzt werden kann, nachdem die einzelnen Fliehgewichte in den dafür vorgesehenen Taschen eingeschlossen sind. Das Einbringen der Fliehgewichte kann abseits der Spindel z.B. mit einer Hilfsvorrichtung erfolgen. Die beiden Ringe, die die Baugruppe umfaßt, können auch von anderen Maschinenelementen gebildet werden. Das zu entlastende Bauteil selbst kann z.B. als einer der beiden Ringe ausgebildet sein. Das Bauteil und ein zweiter Ring speziell für die Fliehkraftkompensation werden dann zusammen als Baugruppe an die Spindel montiert. Durch einen oder mehrere Riegel wird verhindert, daß die beiden Ringe auseinander fahren können und die Fliehgewichte herausfallen können. Die Riegel sind vorzugsweise auch als Verschluß für die Taschen mit den Fliehgewichten ausgebildet. Die Verriegelung verhindert demnach sowohl ein Heraus fallen von Fliehgewichten aus der Baugruppe für die Fliehkraftkompensation im ruhenden Zustand, z.B. bei der Montage, als auch ein zu weites Auseinanderfahren der Ringe der Baugruppe während der Rotation der Spindel.

In der bevorzugten Ausgestaltung der Erfindung nach Anspruch 9 werden die Fliehgewichte durch mindestens je eine Feder in Arbeitsposition gebracht. Diese Maßnahme dient der eindeutigen Positionierung der Fliehgewichte im Ruhezustand der Spindel und der Verhinderung jeglicher Flugbewegung der Fliehgewichte etwa beim Anlauf der Spindel.

Um eine einwandfreie Kompensation der axialen Kräfte zu gewährleisten, insbesondere um Beeinträchtigungen durch Schmutz zu vermeiden, ist die Ausführungsform der Erfindung nach Anspruch 10 vorgesehen. An dem Längsende des Bauteils, an dem die Schieber angeordnet sind, fällt erfahrungsgemäß Schmutz an, der die Funktion der erfindungsgemäßen Vorrichtung stören könnte. Allein durch die räumliche Trennung der Fliehgewichte von den Schiebern wird einer Verschmutzung vorgebeugt. Durch die Anordnung der Fliehgewichte in dem den Schiebern abgewandten Bereich des Bauteils, der ohnehin für eine zuverlässige Verschiebung des Bauteils gekapselt sein muß, genießen die Fliehgewichte ohne weitere Maßnahmen den Schutz dieser Abkapselung.

Ausführungsformen der Erfindung werden im einzelnen anhand der Zeichnung näher erläutert. Dabei zeigen:
- Fig. 1: eine drehangetriebene Spindel mit Fliehkraftkompensation,
- Fig. 2: eine andere Ausführungsform der Spindel mit Fliehkraftkompensation,
- Fig. 3, 4 und 5:: je eine alternative Ausführung der Fliehkraftkompensation,
- Fig. 6: eine Fliehkraftkompensation als separate Baugruppe,
- Fig. 7: einen Schnitt durch Fig.6 nach VII - VII.

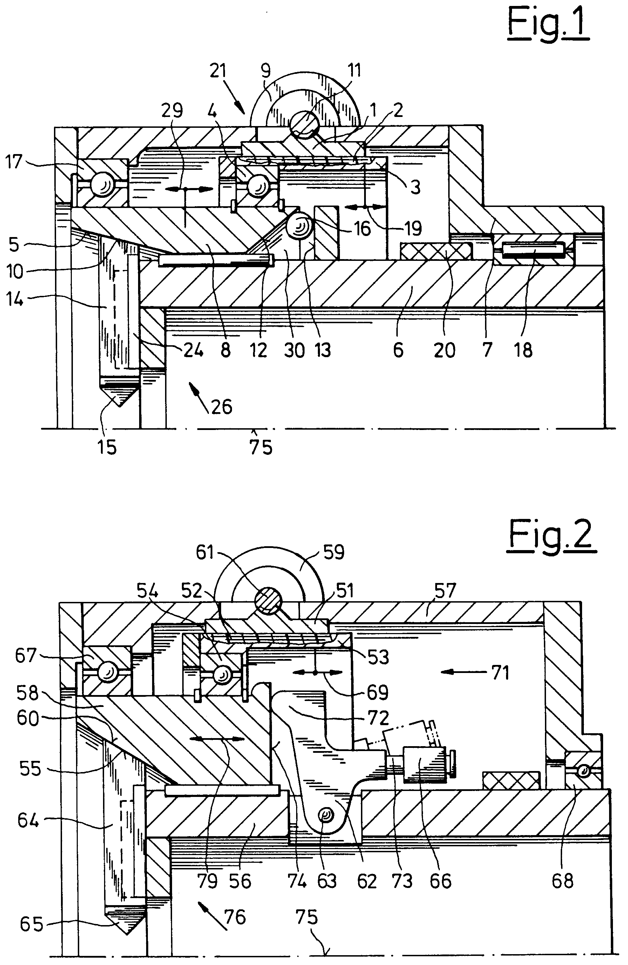

Fig. 1 zeigt eine drehangetriebene Spindel 6, die mit Spindellagern 17, 18 in einem Lagergehäuse 7 aufgenommen ist, einem Bauteil 8, das axial zur Spindel 6 verschieblich ausgebildet ist, einer Mehrzahl sternförmig um die Drehachse 75 der Spindel 6 angeordneter Schieber 14, einem Messerkopf 26 stirnseitig an der Spindel 6, einem Verstellmechanismus 21 zur axialen Verschiebung des Bauteils 8 und einem Treibriemen 20, der die Spindel in Drehung versetzt.

Durch axiale Verschiebung des als Konushülse ausgebildeten Bauteils 8 wird der Schieber 14 relativ zur Spindel 6 in radialer Richtung verschoben. Diese Verschiebung erfolgt mit Hilfe des Stellmotors 9, der mit einer Schnecke 11 ein im Lagergehäuse 7 geführtes, drehbares Schneckenrad 1 antreibt. Über ein Gewinde 2 wird die Drehbewegung des Schneckenrades als reine Axialbewegung auf einen Schubring 3 übertragen. Der Schubring 3 erfaßt mit einer sich über seinen gesamten inneren Umfang erstreckenden Nut ein Schublager 4, dessen innerer Laufring mit der Spindel und dem Bauteil 8 rotiert. Der Schubring 3 und der äußere Laufring des Schublagers 4 sind drehfest im Lagergehäuse 7 gehalten, können aber axial mit dem Bauteil 8 verschoben werden. Sobald der Stellmotor die Schnecke 11 dreht, verschiebt sich das Bauteil 8 in axialer Richtung.

Das Bauteil 8 weist an seiner Einlaufseite eine innere Schräge 5 auf, an der sich der Schieber 14 in radialer Richtung abstützt. Durch eine entsprechende Schräge 10 am Schieber 14 sind dieser und das Bauteil 8 kinematisch miteinander verbunden. Die Schieber 14 sind in radialer Richtung in Führungen 24 stirnseitig am Messerkopf 26 geführt. Bei Rotation der Spindel 6 drücken die Schieber 14 radial gegen die Schräge 5 am Bauteil 8. An der Schräge 5 setzt sich die Radialkraft des bzw. der Schieber entsprechend der Neigung in eine Axialkraft um, die die Spindel 6 und das Bauteil 8 axial gegeneinander verspannen.

Die gegenüberliegende Stirnseite 12 des Bauteils 8 ist als Schräge ausgebildet, die im Zusammenwirken mit einer Stirnfläche 13 an der Spindel 6 einen Spalt bildet, in dem eine Reihe von Kugeln 16 in Taschen 30 vorgesehen ist. Die Kugeln 16 drängen bei Rotation der Spindel 6 nach außen in den sich verjüngenden Spalt aus den Stirnflächen 12, 13 und kompensieren damit die Axialkraft, mit der die Schieber 14 die Spindel und das Bauteil axial verspannen.

Die Axialkräfte müssen so weder über die Spindellager 17, 18 noch über das Schublager 4 übertragen werden. Der Verstellantrieb kann leichtgängig und präzise für die gewünschte Positionierung der Schieber 14 bzw. der an deren nach innen gerichteten Enden vorgesehenen Messer 15 sorgen.

Die in Fig. 2 gezeigte Ausführungsform ist bis auf die Fliehgewichte gleich mit der in Fig. 1 gezeigten Lösung. Sie besteht aus einem Lagergehäuse 57, in dem eine Spindel 56 in Spindellagern 67, 68 aufgenommen ist. Auf der Spindel 56 ist ein als Konushülse ausgebildetes Bauteil 58 in axialer Richtung verschiebbar gelagert, aber gegen Drehung gegenüber der Spindel 56 gesichert. Das Bauteil 58 weist einlaufseitig innen eine Schräge 60 auf, an der sich ein am Messerkopf 76 in radialer Richtung geführter Schieber 64 radial abstützt. Auf der gegenüberliegenden Stirnseite 74 des Bauteils 58 ist ein Winkelhebel 62 gezeigt, der an der Spindel 56 mit einem Gelenk 63 befestigt ist, dessen einer sich in radialer Richtung erstreckender Hebelarm 72 mit seinem freien Ende an der Stirnseite 74 anliegt und dessen zweiter Hebelarm 73 sich parallel zur Drehachse 75 der Spindel erstreckt. Der Hebelarm 73 trägt ein Fliehgewicht 66, das bei Rotation der Spindel 56 über den Hebelarm 72 auf die rückwärtige Stirnseite des Bauteils 58 eine axiale Kraft ausübt. Es sind auf dem Umfang verteilt eine Serie von Winkelhebeln 62 vorgesehen, die eine symmetrische Verteilung der zu kompensierenden Axialkräfte sicherstellen. Der Hebelarm der Fliehgewichte 66 kann in der Länge verändert werden.

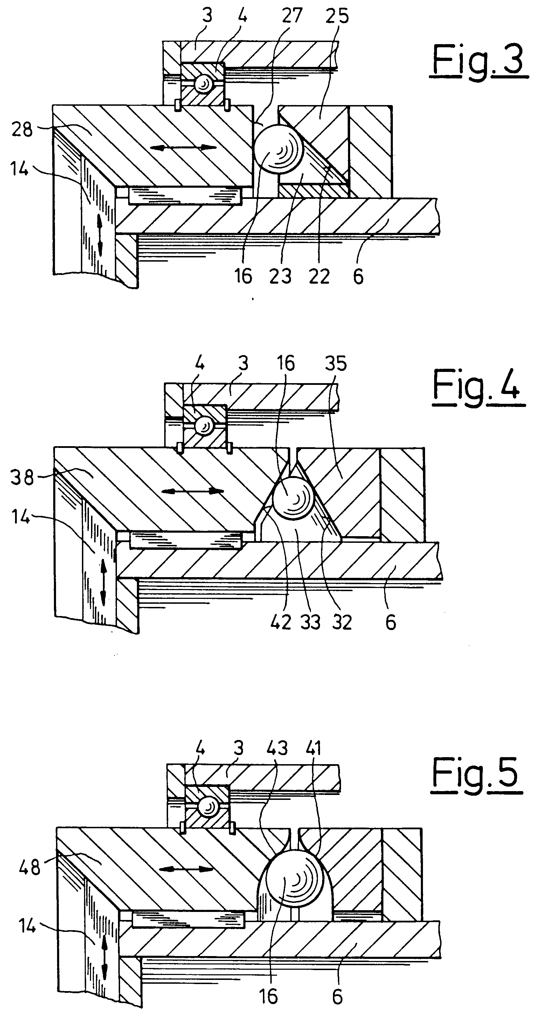

Die Figuren 3, 4 und 5 zeigen eine Lösung ähnlich der in Fig. 1 dargestellten, bei der die Spindel 6 ein Bauteil 28, 38, 48 an ihrem einlaufseitigen Ende tragen. Die Bauteile und die sich daran abstützenden Schieber sind funktionsgleich mit dem Bauteil 58 und dem Schieber 64 in Fig. 2. Gleiches gilt für den Verstellmechanismus mit dem Schubring 3, die hier nur teilweise gezeigt sind. In Fig. 3 ist ein ringförmiger Käfig 25 gegenüber der rückwärtigen Stirnseite 27 des Bauteils 28 um die Spindel 6 gelegt. Er trägt gleichmäßig über seinen Umfang verteilt eine Reihe von Taschen 23, in denen Kugeln 16 gelagert sind. Die Taschen 23 weisen eine Schräge 22 auf, die im Zusammenwirken mit einer Stirnfläche 27 am Bauteil 28 einen sich nach außen verjüngenden Spalt bilden, in den die Kugel 16 bei Rotation der Spindel 6 durch ihre Zentrifugalkraft hineindrängt. Die Stirnfläche 27 ist plan, während die Schräge 23 ausschließlich im Käfig 25 ausgebildet ist.

In Fig. 4 ist sowohl die rückwärtige Stirnseite des Bauteils 38 mit einer Schräge 42 versehen als auch jede der Taschen 33 (von denen nur eine gezeigt ist) mit einer Schräge 32, wobei die zusammengehörenden Schrägen 32, 42 einen sich nach außen verjüngenden Spalt bilden, in den die Kugel 16 bei Rotation der Spindel 6 hineindrängt. Diese Ausführungsform mit je einer Schräge auf beiden Seiten der Kugel hat den Vorzug, daß der Winkelbereich des sich verjüngenden Spaltes in einem weiteren Bereich variiert werden kann.

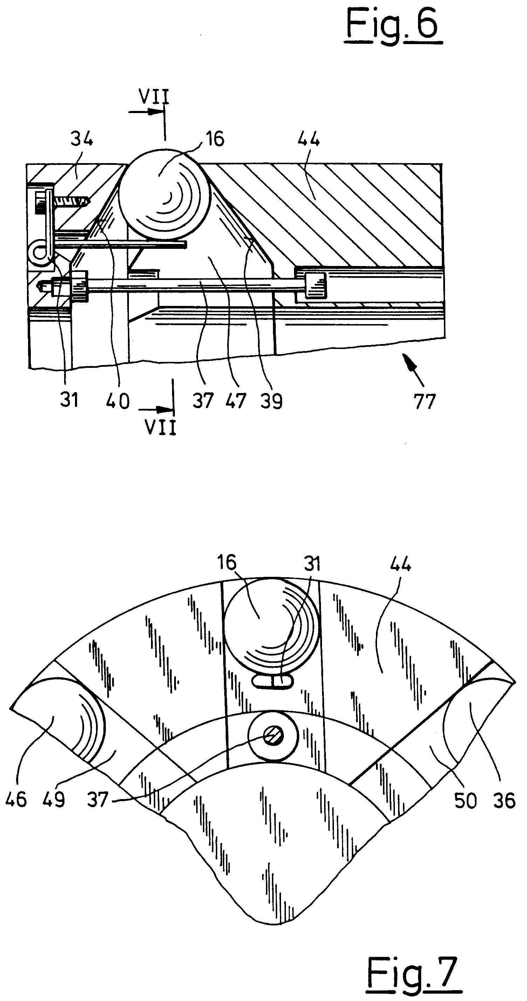

In Fig. 5 wird in einer weiteren Ausführungsform der Erfindung gezeigt, wie die Axialkräfte, die von den Fliehgewichten ausgehen, durch Veränderung der Neigung der Schrägen zu geneigten Kurven 41, 43 variiert werden können. Dabei kann durch geeignete Wahl der Kurven das Maß der Kompensation der Axialkräfte erhöht oder reduziert werden. Diese Auslegung der Axialkräfte erfolgt in Abhängigkeit von der axialen Position des Bauteils 48.

Die in den Figuren 6 und 7 dargestellte Variante entspricht in ihrer Wirkungsweise der in Fig. 4 gezeigten Ausführungsform. Deren Besonderheit liegt darin, daß zur Fliehkraftkompensation eine komplette vormontierte Baugruppe 77 auf die Spindel aufgeschoben wird, wobei die Bestückung mit den Kugeln 16, 36, 46 bereits vor der Montage der Baugruppe an die Spindel erfolgt. Die Kugeln werden durch die Verriegelung der beiden Ringe 34, 44 durch mehrere als Riegel 37 ausgebildete Schrauben daran gehindert, die Taschen 47, 49, 50 zu verlassen. Die Riegel 37 verhindern das in zweifacher Hinsicht. Zum einen verhindern die Riegel 37 ein zu weites Auseinanderfahren der Ringe 34, 44, so daß die Kugeln nicht nach außen aus den Taschen herausgeschleudert werden können, zum anderen ist der Weg nach innen durch die Riegel direkt versperrt. Zusätzlich stellt eine Feder 31, die an einem der Ringe 34 befestigt ist, sicher, daß die Kugeln stets nach außen zur Anlage an die Schrägen 39, 40 an den Ringen 34, 44 gedrückt werden. Damit wird erreicht, daß die Fliehgewichte bei keiner Stellung des Bauteils in der Anlaufphase oder kurz vor Stillstand der Spindel in ihren Taschen 47, 49, 50 frei fliegen.

Eine Besonderheit der Erfindung wird darin gesehen, daß die Kompensation der mittelbar von den Schiebern auf das Bauteil ausgeübten Axialkräfte nicht im ohnehin sehr engen Bereich der Schieber an der Messerkopfseite der Spindel erfolgt, wo alle Teile im hohen Maße der Verschmutzung und dem Verschleiß unterliegen, sondern entfernt davon im abgekapselten Bereich zwischen den Lagern der Spindel im Lagergehäuse.

## Patentansprüche

1. Drehangetriebene Spindel (6, 56) mit drehzahlabhängig veränderlicher axialer Belastung, mit einem Lagergehäuse (7, 57), in dem die Spindel (6, 56) mittels Lagern (17, 18, 67, 68) getragen ist, und einem mit der Spindel (6, 56) umlaufendes und axial zur Spindel (6, 56) verschiebbarem Bauteil (8, 58), das mit mindestens einem radial zur Spindel (6, 56) beweglichen, an der Spindel (6, 56) geführten Schieber (14, 64) kinematisch verbunden ist, **gekennzeichnet durch** Fliehgewichte (16, 66), deren in radialer Richtung wirkende Kräfte zur Kompensation der vom Schieber (14, 64) auf das axial verschiebbare Bauteil (8, 58) eingeleiteten Axialkräfte in axiale Richtung umgelenkt werden.

2. Drehangetriebene Spindel nach Anspruch 1, **dadurch gekennzeichnet**, daß die kinematische Verbindung des axial verschiebbaren Bauteiles (8, 58) und des Schiebers (14, 64) durch Schrägen (5, 10, 55, 60) gebildet wird, wobei sich der in radialer Richtung beweglich an der Spindel (6, 56) geführte Schieber (14, 64) radial an der Schräge (5, 60) des Bauteiles (8, 58) abstützt.

3. Drehangetriebene Spindel nach Anspruch 1 oder 2, **dadurch gekennzeichnet**, daß die Umlenkung der in radialer Richtung wirkenden Kräfte der Fliehgewichte (16) durch eine Schräge (22) der Spindel (6) oder eine Schräge (12) des Bauteils (8) bewirkt wird.

4. Drehangetriebene Spindel nach einem der Ansprüche 1 bis 3, **dadurch gekennzeichnet**, daß die Fliehgewichte (16) als Kugeln ausgebildet sind, die sich an einer der Schrägen (12, 22) und an einer Stirnfläche (27) des Bauteils (8, 58) bzw. einer Stirnfläche (13) der Spindel (6) abstützen.

5. Drehangetriebene Spindel nach einem der Ansprüche 1 oder 2, **dadurch gekennzeichnet**, daß die Fliehgewichte (66) an mindestens einem Winkelhebel (62) angeordnet sind, dessen einer Arm (72) an einer Stirnfläche (74) des Bauteils (58) oder der Spindel (56) anliegt und der gelenkig mit der Spindel (56) oder dem Bauteil (58) verbunden ist.

6. Drehangetriebene Spindel nach einem der Ansprüche 1 bis 5, **dadurch gekennzeichnet**, daß das Bauteil (8, 58) mit einem Verstellmechanismus (21) verbunden ist, der es in axialer Richtung relativ zur Spindel (6, 56) bewegt.

7. Drehangetriebe Spindel nach Anspruch 6, **dadurch gekennzeichnet**, daß der Verstellmechanismus (21) vom ruhenden Lagergehäuse (7, 57) aus betätigbar ist.

8. Drehangetriebene Spindel nach einem der Ansprüche 1 bis 7, **dadurch gekennzeichnet**, daß die Fliehgewichte (16) in einer Baugruppe (77) angeordnet sind, wobei die Baugruppe (77) zwei Ringe (34, 44) umfaßt, die die Spindel (6) in montiertem Zustand umgeben und von den Fliehgewichten (16) axial auseinandergedrückt werden.

9. Drehangetriebene Spindel nach einem der Ansprüche 1 bis 8, **dadurch gekennzeichnet**, daß die Fliehgewichte (16) durch Federn (31) radial zur Drehachse der Spindel (6) nach außen gedrückt werden.

10. Drehangetriebene Spindel nach einem der Ansprüche 1 bis 9, **dadurch gekennzeichnet**, daß die Fliehgewichte (16) bzw. die Baugruppe (77) an dem den Schiebern (14) gegenüberliegenden Längsende des Bauteils (8) angeordnet sind.

## Claims

1. Rotary-drive spindle (6, 56) having an axial load variable as a function of the speed of rotation, with a bearing casing (7, 57), in which the spindle (6, 56) is borne by means of bearings (17, 18, 67, 68), and a component (8, 58), rotating with the spindle (6, 56) and axially displaceable relative to the spindle (6, 56), which is kinematically connected by at least one slide (14, 64), capable of radial movement relative to the spindle (6, 56) and guided on the spindle (6, 56), **characterised by** centrifugal weights (16, 66) whose radially acting forces are diverted into the axial direction in order to compensate for the axial forces introduced into the axially displaceable component (8, 58) by the slide (14, 64).

2. Rotary-drive spindle as per Claim 1, **characterised in that** the kinematic connection between the axially displaceable component (8, 58) and the slide (14, 64) is formed by slopes (5, 10, 55, 60), where the slide (14, 64) guided on the spindle (6, 56) in a manner permitting radial movement is radially supported on the slope (5, 60) of the component (8, 58).

3. Rotary-drive spindle as per Claim 1 or 2, **characterised in that** the deflection of the radially acting forces of the centrifugal weights (16) is achieved by a slope (22) of the spindle (6) or a slope (12) of the component (8).

4. Rotary-drive spindle as per one of Claims 1 to 3, **characterised in that** the centrifugal weights (16) are designed as balls which rest on one of the slopes (12, 22) and on one face end (27) of the component (8,58 ) or one face end (13) of the spindle (6).

5. Rotary-drive spindle as per Claim 1 or 2, **characterised in that** the centrifugal weights (66) are located on at least one angular lever (62), one arm of which is in contact with a face end (74) of the component (58) or the spindle (56) and which is hinged to the spindle (56) or the component (58).

6. Rotary-drive spindle as per one of Claims 1 to 5, **characterised in that** the component (8, 58) is connected to an adjusting mechanism (21) which moves it in the axial direction relative to the spindle (6, 56).

7. Rotary-drive spindle as per Claim 6, **characterised in that** the adjusting mechanism (21) can be actuated from the stationary bearing housing (7, 57).

8. Rotary-drive spindle as per one of Claims 1 to 7, **characterised in that** the centrifugal weights (16) are arranged in an assembly (77), where the assembly (77) comprises two rings (34, 44) which surround the spindle (6) in assembled condition and which are axially forced apart by the centrifugal weights (16).

9. Rotary-drive spindle as per one of Claims 1 to 8, **characterised in that** the centrifugal weights (16) are forced radially outwards in relation to the axis of rotation of the spindle (6) by springs (31).

10. Rotary-drive spindle as per one of Claims 1 to 9, **characterised in that** the centrifugal weights (16) and the assembly (77) are arranged on the longitudinal end of the component (8) opposite to the slides (14).

## Revendications

1. Broche entraînée (6, 56) à charge axiale variable en fonction de la vitesse de rotation, avec un carter de palier (7, 57) dans lequel la broche est portée au moyen de roulements (17, 18, 67, 68), et avec un élément de construction (8, 58) tournant avec la broche (6, 56) et déplaçable axialement par rapport à la broche (6, 56) et cinématiquement joint à au moins une coulisse (14, 64) déplacable radialement par rapport à la broche (6, 56) et guidée à la broche (6, 56), caractérisée par des masselottes centrifuges (16, 66) dont les forces agissant radialement sont renvoyées dans le sens axial pour compenser les forces axiales exercées par la coulisse (14, 64) sur l'élément de construction (8, 58) déplacable axialement.

2. Broche entraînée suivant revendication 1, caractérisée par ce que la jonction cinématique de l'élément de construction (8, 58) déplacable axialement et de la coulisse (14, 64) est constituée par des plans inclinés (5, 10, 55, 60) où la coulisse (14, 64) guidée à la broche (6, 56) de façon déplacable radialement s'appuie radialement sur le plan incliné (5, 60) de l'élément de construction (8, 58).

3. Broche entraînée suivant revendication 1 ou 2, caractérisée par ce que le renvoi des forces agissant radialement des masselottes centrifuges (16) est réalisé par un plan incliné (22) de la broche (6) ou par un plan incliné (12) de l'élément de construction (8).

4. Broche entraînée suivant une des revendications 1 à 3, caractérisée par ce que les masselottes centrifuges (16) sont des billes qui s'appuient sur un des plans inclinés (12, 22) et sur une face frontale (27) de l'élément de construction (8, 58) ou une face frontale (13) de la broche (6).

5. Broche entraînée suivant une des revendications 1 ou 2, caractérisée par ce que les masselottes centrifuges (66) sont disposées à au moins un levier coudé (62) dont le bras (72) repose contre une face frontale (74) de l'élément de construction (58) ou de la broche (56) et qui est joint de façon articulée à la broche (56) ou à l'élément de construction (58).

6. Broche entraînée suivant une des revendications 1 à 5, caractérisée par ce que l'élément de construction (8, 58) est relié à un mécanisme d' déplacement (21) qui le déplace axialement par rapport à la broche (6, 56).

7. Broche entraînée suivant revendication 6, caractérisée par ce que le mécanisme de déplacement (21) peut être actionné depuis le carter de palier (7, 57) fixe.

8. Broche entraînée suivant une des revendications 1 à 7, caractérisée par ce que les masselottes centrifuges (16) sont disposées dans un groupe de construction (77), où le groupe de construction (77) comporte deux anneaux (34, 44) qui entourent la broche (6) à l'état assemblé et qui sont écartés axialement par les masselottes centrifuges (16).

9. Broche entraînée suivant une des revendications 1 à 8, caractérisée par ce que les masselottes centrifuges (16) sont poussées vers l'extérieur, radialement par rapport à la broche (6), par des ressorts (31).

10. Broche entraînée suivant une des revendications 1 à 9, caractérisée par ce que les masselottes centrifuges (16) ou le groupe de construction (77) sont disposés au bout longitudinal, opposé aux coulisses (14), de l'élément de construction (8).
